(19) Europäisches Patentamt
European Patent Office
Office européen des brevets

(11) EP 2 375 482 B1

(12) EUROPEAN PATENT SPECIFICATION

(45) Date of publication and mention of the grant of the patent:
09.01.2013 Bulletin 2013/02

(51) Int Cl.:
$H01M\ 8/04$ (2006.01)
$H01M\ 8/06$ (2006.01)
$F23D\ 14/22$ (2006.01)

(21) Application number: 10187555.7

(22) Date of filing: 14.10.2010

(54) **FUEL CELL SYSTEM**

BRENNSTOFFZELLENSYSTEM

SYSTÈME DE PILES À COMBUSTIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.04.2010 US 342353 P**

(43) Date of publication of application:
**12.10.2011 Bulletin 2011/41**

(73) Proprietor: **Samsung SDI Co., Ltd.**
**Gyeonggi-do (KR)**

(72) Inventors:
• **Shin, Woo-Cheol**
**Gyeonggi-do (KR)**
• **Son, In-Hyuk**
**Gyeonggi-do (KR)**
• **Ahn, Jin-Goo**
**Gyeonggi-do (KR)**
• **Choi, Jong-Rock**
**Gyeonggi-do (KR)**
• **Song, In-Seob**
**Gyeonggi-do (KR)**

(74) Representative: **Walaski, Jan Filip**
**Venner Shipley LLP**
**200 Aldersgate**
**London**
**EC1A 4HD (GB)**

(56) References cited:
EP-A1- 1 205 710          WO-A1-03/089128
WO-A1-2010/025145      WO-A2-2007/008973
US-A- 2 942 655           US-A- 5 833 447
US-A1- 2002 006 535     US-A1- 2008 081 233
US-B1- 6 221 117

**Description**

The present invention relates to a fuel cell system comprising a reforming apparatus that includes a nozzle assembly that can efficiently jet anode off-gas containing oxidation fuel and hydrogen to an oxidizer.

A steam reforming type reformer can be used to acquire high-concentration hydrogen from a fuel cell. A heat source is required because an endothermic reaction occurs in the steam reforming type reformer. As the heat source, a flame type or a catalyst type burner is mainly used.

In the flame type burner that is generally used for a reformer structure, it is required to achieve a burner that can generate stable heat without extinguishing the flame.

Further, in the catalyst type burner, it is required to achieve a burner without a hot spot in the catalyst and backfire, that is, flashback in a catalytic reaction starter. In particular, in a structure reusing anode off-gas (AOG) to improve efficiency of a fuel cell, the structure for preventing backfire is very important because the reactivity of the hydrogen contained in a large amount in the gas anode off-gas is very high.

Embodiments of the invention provide a member that improves efficiency and operational safety of a fuel reformer, by reusing highly-reactive hydrogen by burning anode off-gas.

Further, the embodiments provide a burner that can efficiently mix and jet oxidation fuel and anode off-gas.

Further, the embodiments provide a member that can supply a fuel mixture without generating backfire in a structure recycling anode off-gas to the burner of a fuel reformer in order to increase efficiency of a fuel cell system.

US5833447, WO2007/008973, EP1205710, US2008/0081233 and US7828864 disclose various types of nozzle assembly.

According to the invention, there is provided a fuel cell system according to claim 1.

The first nozzle may be centrally located in the nozzle plate. The second nozzles may be uniformly distributed around the first nozzle.

The connecting unit may comprise a first channel between the first nozzle and an anode off-gas inlet and a second channel surrounding the first channel and connecting the plurality of second nozzles with the oxidising unit fuel inlet.

The second channel may comprise a first portion comprising a continuous channel for receiving the oxidising unit fuel and a second portion comprising a plurality of separate channels connected to the continuous channel for providing the oxidising unit fuel to the plurality of second nozzles. The relative areas of the first and second nozzles may be arranged so that the oxidising unit fuel is supplied in a ratio of one to three and a half times the volume of the anode off-gas.

The maximum diameter of the first nozzle may be 2.5mm and the maximum diameter of each of the second nozzles may be 1.5mm.

The oxidising unit may comprise a housing that is closed by the nozzle plate of the nozzle assembly and an oxidising portion within the housing. The oxidising portion may comprise an oxidation catalyst.

The reformer may comprise a vessel for receiving a fuel to be reformed, the vessel being closed at one end by a lower plate, a reforming portion for converting the fuel to be reformed to a reformate and means within the vessel for receiving and discharging the reformate, wherein the reformer is disposed within the housing of the oxidising unit.

The lower plate may be arranged relative to the nozzle plate such that the anode off-gas and the oxidising unit fuel mix in the region between the lower plate and the nozzle plate and flow around the reformer into the oxidising portion of the oxidising unit.

The fuel reforming apparatus may further comprise an oxidising unit plate between the lower plate and the nozzle plate, the oxidising unit plate including third nozzles for providing a mixture of the anode off-gas and the oxidising unit fuel to the oxidising portion.

The total area of the third nozzles may be between one to four times the sum of the total areas of the first nozzles and the second nozzles.

Walls forming a space between the third nozzles and the oxidising portion may be arranged such that the space gradually widens from the third nozzles towards the oxidising portion.

The fuel reforming apparatus may further comprise an evaporator arranged to receive exhaust heat from the oxidising unit to convert water to steam and to provide the steam to the reformer with the fuel to be reformed.

According to embodiments of the present invention, it is possible to uniformly distribute fluid while preventing backfire, or flashback, in a combustion portion, and increase the life span of a fuel reformer and maintain stable reforming temperature, by optimizing the quenching diameter and distribution of nozzles such that burner fuel, such as LPG, anode off-gas and air are stably mixed.

That is, embodiments of the present invention makes it possible to increase the entire efficiency of the fuel cell by supplying heat needed for reforming, using the anode off-gas, stably burn the anode off-gas without backfire and prevent deterioration of the fuel reformer due to concentration of thermal energy by preventing channeling in a thermal distribution diagram.

The accompanying drawings, together with the specification illustrate exemplary embodiments of the present invention, and, together with the description, serve to explain the principles of the present invention.

FIG. 1 is a perspective view showing a nozzle device according to an embodiment of the present invention;
FIG. 2A is a perspective view cut along line II-II' of FIG. 1;
FIG. 2B is a perspective view cut along line III-III of FIG. 2A;
FIG. 2C is a perspective view cut along line IV-IV' of FIG. 2A;
FIG. 3 is a cross-sectional view showing a burner nozzle according to an embodiment of the present invention;
FIG. 4 is a schematic cross-sectional view showing a fuel reforming apparatus according to an embodiment of the present invention;
FIG. 5 is a schematic cross-sectional view showing a fuel reforming apparatus according to another embodiment of the present invention;
FIG. 6 is a perspective view of the oxidising unit lower plate;
FIG. 7 is a schematic cross-sectional view showing a fuel reforming apparatus according to another embodiment of the present invention; and
FIG. 8 is a schematic cross-sectional view showing an embodiment in which an evaporator is included in a fuel reforming apparatus of the present invention.

Hereinafter, exemplary embodiments of the present invention will be described with reference to the accompanying drawings. The terms representing directions, such as "up, down, left, right" used herein are considered to be based on the status shown in the drawings, if not specifically defined or stated. Further, the same reference numerals represent the same parts throughout the embodiments.

Typical fuel cells are composed of a fuel converter (reformer and reactor) reforming and supplying fuel and a fuel cell module. The fuel cell module implies an assembly including a fuel cell stack converting chemical energy into electric energy and thermal energy in an electrochemical method.

The present invention relates to an oxidizing unit supplying heat to a reformer and a nozzle assembly supplying fuel to the oxidizing unit. Hereafter, the present invention is described in detail.

<Example 1 >

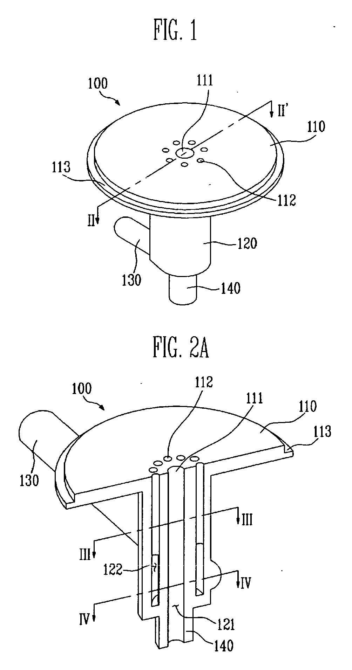

A nozzle assembly 100, also referred to as a burner nozzle assembly, is first described with reference to FIGS. 1 to 3. The nozzle assembly 100 can be divided into a nozzle plate 110, a channel unit 120, an oxidation fuel introducer 130, and an AOG introducer 140.

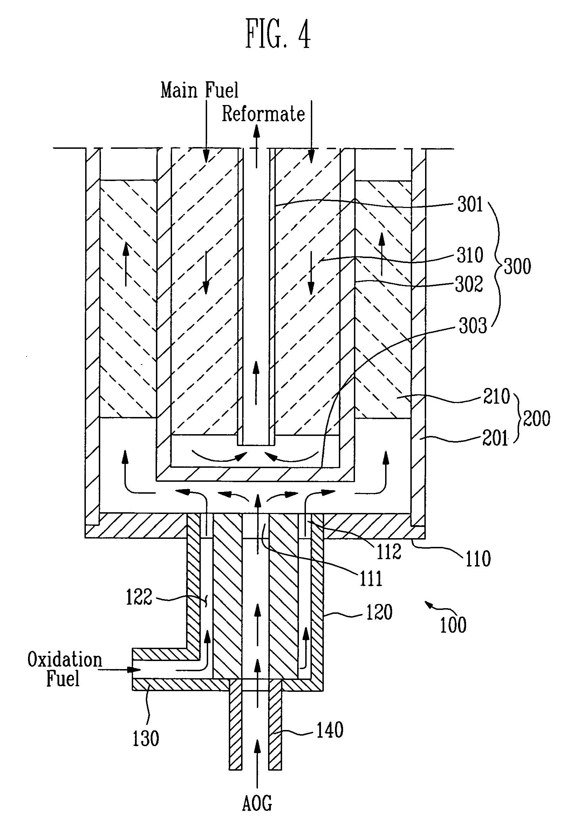

The oxidation fuel introducer 130 and the AOG introducer 140 are pipes through which fuel for an oxidizing unit 200 (see FIG. 4) is supplied, this fuel being referred to herein as oxidation fuel, or as oxidising unit fuel. The oxidation fuel is supplied to the nozzle assembly 100 through the oxidation fuel introducer 130 and the anode off-gas created in the operation of the fuel cell is supplied to the nozzle assembly 100 through the AOG introducer 140.

The nozzle plate 110 is formed in a circular plate or a predetermined-shaped plate. It is preferable that the nozzle plate 110 is made of a heat resistant material enduring high temperatures of about 1000°C. The AOG nozzle 111 and the oxidation fuel nozzle 112 are bored through the nozzle plate 110. The AOG nozzle 111 is formed at the centre of the nozzle plate 110 and the oxidation fuel nozzle 112 is disposed radially at a predetermined distance from the centre of the AOG nozzle 111. Further, the anode off-gas and the oxidation fuel are supplied into the oxidizing unit 200 through the AOG nozzle 111 and the oxidation fuel nozzle 112, respectively.

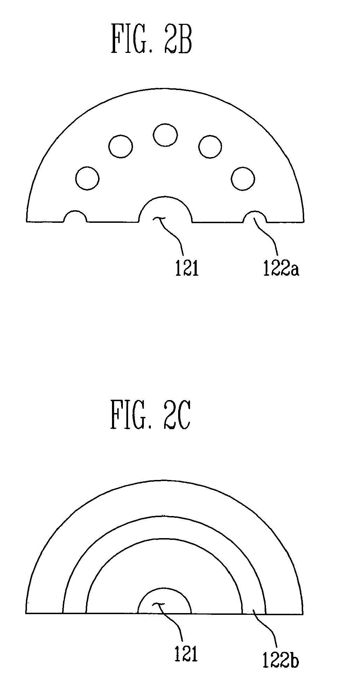

The channel unit 120, also referred to herein as a connecting unit, is described with reference to FIGS. 2A to 3. FIG. 2B is a transverse cross-sectional view taken along line III-III' in FIG. 2A and FIG. 2C is a transverse cross-sectional view taken along line IV-IV' in FIG. 2A.

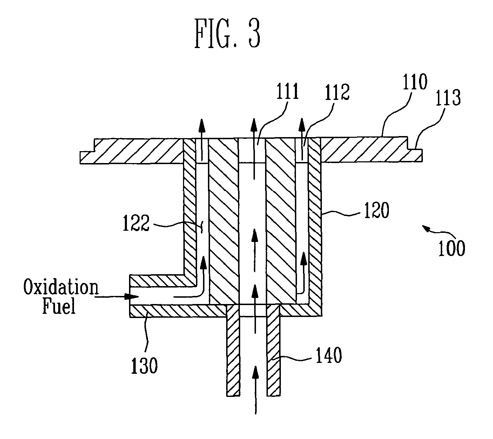

The channel unit 120 is formed by inserting a pipe from the oxidation fuel introducer 130 and the AOG introducer 130 to the AOG nozzle 111 and the oxidation fuel nozzle 112 formed in the nozzle plate 110, or the channel unit 120 has connecting channels therein. As shown in FIG. 3, the anode off-gas is delivered from the AOG introducer 140 to the AOG nozzle 111 through an AOG channel 121. The oxidation fuel is distributed and delivered to each oxidation fuel nozzle 112 from the oxidation fuel introducer 130 through oxidation fuel channels 122. Meanwhile, the oxidation fuel channel 122, as shown in FIGS. 2B and 2C, may have different upper and lower structures. That is, the lower portion 122b of the oxidation fuel channel may have a space that can provide a circumferentially continuous channel to receive oxidation fuel and deliver it under each oxidation fuel nozzle 112, and the upper portion 122a of the oxidation fuel channel may have a plurality of discontinuous spaces to distribute and deliver the oxidation fuel from the lower portion 122b of the oxidation fuel channel to each oxidation fuel nozzle 112. However, since the nozzle assembly 100 is important in the configuration and position of the AOG nozzle 111 and the oxidation fuel nozzle 112 on the nozzle plate 110, it is possible to modify in the same operational range the configuration of the oxidation fuel introducer 130, the configuration of the AOG introducer 140, the configuration of the channel unit 120, and the connection relationships between them.

The oxidizing unit 200 and the reformer 300 are described with reference to FIG. 4.

A reformer 300 is provided for acquiring hydrogen, which is a raw substance to directly use to produce electricity in a fuel cell from a hydrocarbon-based fuel (hereafter, referred to as 'main fuel'). In a steam reforming type, although it is possible to increase the output of the cell and acquire high-concentration hydrogen, it is required to supply heat from the outside due to the endothermic reaction, which is achieved by the oxidizing unit 200.

The reformer 300 is formed of a double hollow cylinder. The outer pipe, or vessel, 302, the outermost part of the reformer, is closed at the lower end with a reformer lower plate 303 and has an inner pipe, or other discharge means, 301 with the lower end open therein. The main fuel makes a steam reforming reaction while flowing down through a reforming-reacting portion 310 disposed between the reformer inner pipe 301 and the reformer outer pipe 302, and then is delivered upward through the reformer inner pipe 301.

The oxidizing unit 200 of this embodiment has a hollow cylindrical shape and is preferably closed by the nozzle plate 110. The reformer 300 is disposed inside the oxidizing unit 200. In this configuration, the reformer lower plate 303 maintains a predetermined distance from the nozzle plate 110 and the reformer outer pipe 302 also maintains a predetermined distance from the oxidizing unit body 201. The anode off-gas and the oxidation fuel discharged from the AOG nozzle 111 and the oxidation fuel nozzle 112 flow through the space defined between the reformer 300 and the oxidizing unit 200.

The anode off-gas and the oxidation fuel are mixed and flow upward along the space between the reformer outer pipe 302 and the oxidizing unit body 201 after passing under the reformer lower plate 303, and then oxidize and generate heat in the oxidizing portion 210 between the reformer outer pipe 302 and the oxidizing unit body 201. At least any one of $PdAl_2O_3$, $NiO$, $CuO$, $CeO$, $Al_2O_3$, Rh, Pd, and Pt can be used as a catalyst in the oxidizing portion 210. Meanwhile, the configuration of the upper portions of the oxidizing unit 200 and the reformer 300 is not shown for the convenience of description in this embodiment.

The flow and mixing process of the anode off-gas and the oxidation fuel are described with reference to FIG. 4. An LPG (hydrocarbon-based fuel)/air mixture can be used as the oxidation fuel. On the other hand, the anode off-gas, as described above, contains a large amount of hydrogen that is discharged without reacting with the fuel electrode of the fuel cell. Since the hydrogen is highly reactive, backfire is likely to be generated when the anode off-gas is directly supplied into the oxidizing unit. Therefore, the possibility of backfire is reduced by mixing the anode off-gas containing a large amount of high-reactive hydrogen with oxidation fuel having relatively low reactivity (e.g. a gas mixture of LPG and air) and supplying the mixture into the oxidizing unit.

Meanwhile, since the hydrogen has a very small molecular weight, diffusion speed is very large. Therefore, the anode off-gas is larger in diffusion speed than the oxidation fuel, when the anode off-gas and the oxidation fuel are supplied under the same pressure. Accordingly, as shown in FIG. 4, the anode off-gas is mixed with the oxidation fuel discharged from the oxidation fuel nozzle 112 and then flows into the oxidizing portion 210, after being supplied from the AOG nozzle 111 into the oxidizing unit 200. In this operation, as described above, the hydrogen-rich anode off-gas is large in diffusion speed, such that the anode off-gas is injected into oxidation fuel having large concentration; therefore the anode off-gas and the oxidation fuel are sufficiently mixed before reaching the oxidizing portion 210. As a result, the mole number of the molecules of the hydrogen per unit volume of the fuel containing the mixture of the anode off-gas and the oxidation fuel reduces in proportion to the mixed ratio of the oxidation fuel, relatively to the anode off-gas itself, and possibility of backfire is correspondingly reduced.

The mixing ratio of the anode off-gas and the oxidation fuel can be adjusted by the diameter of the AOG nozzle 111, the diameter and the number of the oxidation fuel nozzles 112, under the assumption that the supply pressures of the anode off-gas and the oxidation fuel are the same. In other words, as the diameter of the AOG nozzle 111 increases, the mixing ratio of the anode off-gas increases, and as the diameter or the number of the oxidation fuel nozzles 112 increases, the mixing ratio of the oxidation fuel can be increased. However, the size of the AOG nozzle 111 cannot be infinitely increased due to the possibility of backfire, whereas when the AOG nozzle 111 is too small in size, the amount of anode off-gas supplied becomes too small, which causes a problem. The AOG nozzle 111 has a maximum diameter of preferably 2.5mm, in consideration of the possibility of backfire and the amount of anode off-gas supplied whereas the oxidation fuel nozzle 112 has a maximum diameter of preferably 1.5mm.

For the oxidation fuel nozzle 112, it can be determined in accordance with the area of the AOG nozzle 111, in consideration of the mixing ratio. It is preferable that the oxidation fuel is supplied in a proportion of one to three and a half times the volume of the anode off-gas.

For example, when the diameter of the AOG nozzle 111 is 2.5mm and the mixing ratio of the anode off-gas and the oxidation fuel is 1:2, it is possible to dispose twelve oxidation fuel nozzles 112 having a diameter of 1mm around the AOG nozzle 111. In this case, the discharge area of each nozzle is as follows.

$$\text{AOG discharge area} = (1.25)^2 \times \pi = 1.5625$$

$$\text{Oxidation fuel discharge area} = 12 \times (0.5)^2 \times \pi = 3$$

Meanwhile, it is preferable to dispose the oxidation fuel nozzles 112 at a regular distance such that the anode off-gas and the oxidation fuel are uniformly mixed, in order to prevent channeling in the thermal distribution diagram in operating the oxidizing unit 200 due to disproportionate distribution of the hydrogen.

<Example 2>

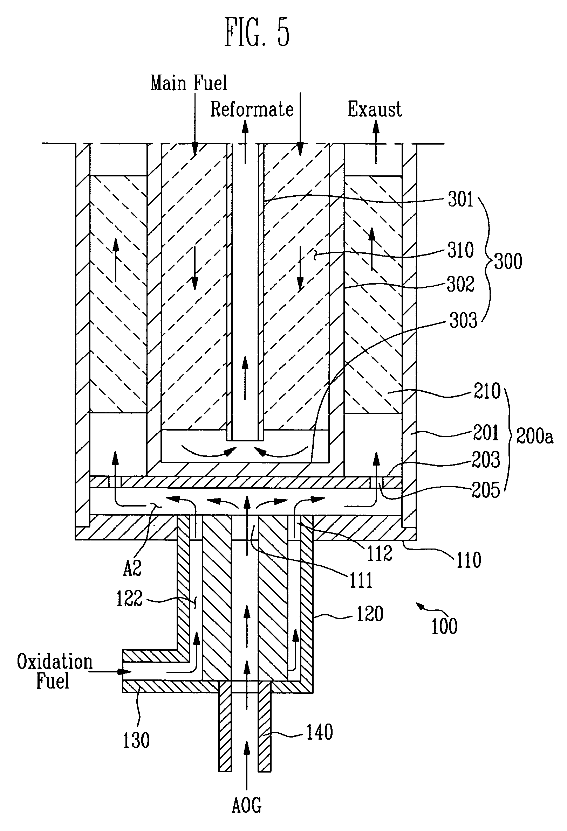

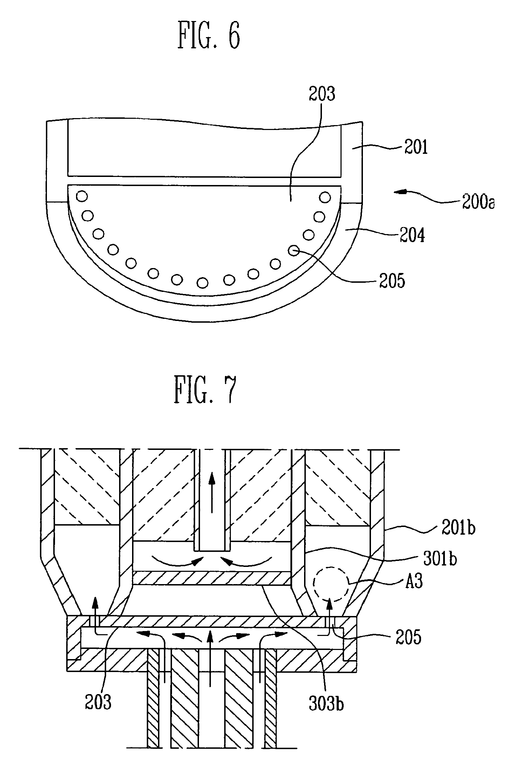

Another embodiment is described with reference to FIGS. 5 to 7. This embodiment relates to the lower structure of an oxidizing unit which reinforces mixing of the anode off-gas and the oxidation fuel.
An oxidizing unit 200a according to this embodiment is closed at the lower end by a nozzle plate 110 and has an oxidizing unit lower plate 203 disposed at a predetermined distance from an oxidizing unit body 201 having the nozzle plate 111 to close the lower portion of the oxidizing unit body 201. Therefore, a circular plate-shaped space can be defined between the oxidizing unit plate 203 and the nozzle plate 110. Further, mixed oxidation fuel nozzles 205 are formed through the oxidizing unit lower plate 203. The mixed oxidizing fuel nozzles 205 are disposed at a predetermined distance from the oxidizing unit lower plate 203 and biased to the oxidizing unit body 201.
In this structure, the diameter of the nozzle plate 110 of the nozzle assembly 100 is determined such that the nozzle plate 110 can be inserted in a small gap from under the oxidizing unit body 201. A stepped portion 113 (see FIG. 1) having a larger diameter than the nozzle plate 110 is formed around the nozzle plate 110 such that the nozzle plate 110 is inserted by a predetermined depth in the oxidizing unit body 201. It is preferable to combine the nozzle plate 1110 and the oxidizing unit body 201 and then seal it by welding.
When the nozzle plate 110 and the oxidizing unit body 201 are combined, as shown in FIG. 5, a predetermined space A2 having a circular plate shape is defined between the nozzle plate 110 and the oxidizing unit lower plate 203.
As described above, the anode off-gas and the oxidation fuel are mixed while flowing to the oxidizing portion 210 through the channel, in which the outlet of the mixing space A2 is blocked by the oxidation fuel nozzle 205, such that the number of collisions of the molecules in the anode off-gas and the oxidation fuel increases. Accordingly, the anode off-gas and the oxidation fuel can be mixed more easily than in example 1.
The diameter of the mixed oxidation fuel nozzle 205 depends on the supply amount of mixed oxidation fuel. That is, the total area of the mixed oxidation fuel nozzles 205 is preferably one or four times the sum of the total area of the AOG nozzle and the oxidation fuel nozzles. When it is under one time, unnecessary pressure is generated in the region A2, and when it is above four times, the effect of mixing by the nozzle according to this embodiment is reduced. For example, as exemplified above, when the diameter of the AOG nozzle is 2.5mm and the diameter of the oxidation fuel nozzle is 1mm and the number is 12, the diameter and the number of the mixed oxidation fuel nozzle 205 can be set to 1.5mm and 30, respectively. In this case, the total area of the AOG nozzle 111 and the oxidation fuel nozzles 112 is $4.5625\pi$ and the total area of the mixed oxidation fuel nozzles 205 is $16.875\pi$, which is four times the sum of the area of the AOG nozzle 111 and the oxidation fuel nozzles 112.
On the other hand, as shown in FIG. 7, the anode off-gas and the oxidation fuel are first mixed by collision of supplied gases around each nozzle and then secondarily mixed while flowing to the mixed oxidation fuel nozzles 205 through the channel.

<Example 3>

Another embodiment of the present invention is described with reference to FIG. 7. This embodiment is meaningful in narrowing the space around the mixed oxidation fuel nozzles 205, as compared with the example 2.
In this embodiment, the lower end of an oxidizing unit body 201b is bent inside and the lower end of a reformer external pipe 301b is bent outside; thereafter, the lower end of the oxidizing unit body 201b is sealed by attaching a nozzle plate 110. In order to prevent unnecessary space from being defined under the reformer external pipe 303b, it is possible to seal the lower end of the reformer external pipe 301 b by providing a specific reformer lower plate 303b at a predetermined height.
According to this configuration, it is possible to make a space A3 that become gradually wider from the outlet of the mixed oxidation fuel nozzle 205. When the mixed oxidation fuel is discharged from the mixed oxidation fuel nozzle 205 and passes through the space A3, the gas concentration is reduced and the flow speed of the fuel mixture is relatively high, because the space is narrow around the nozzle. This feature makes it possible to further reduce the possibility of flashback around the mixed oxidation fuel nozzle 205.

<Example 4>

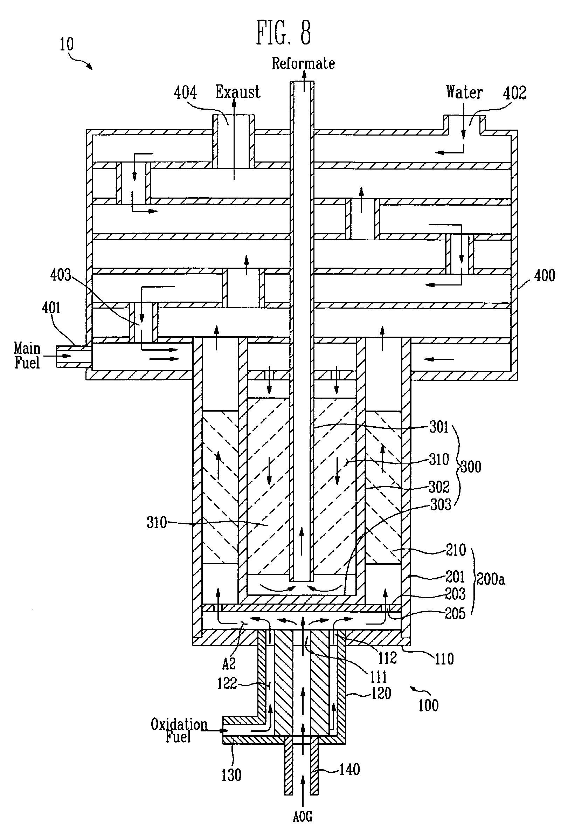

Another embodiment including an evaporator 400 is described with reference to FIG. 8.

The evaporator 400 is provided to evaporate water supplied to the reformer 300 using the steam reforming method, using the thermal energy of the exhaust discharged from an oxidizing unit 200a. In this embodiment, the evaporator 400 has a structure in which a step along which water flows and a step through which the exhaust flows are alternately disposed to increase the heat exchange efficiency of the exhaust.

The anode off-gas and the oxidation fuel are supplied through the AOG nozzle 111 and the oxidation fuel nozzle 112, respectively, mixed in a space A2 defined between the oxidizing lower plate 203 and the nozzle plate 111, and then discharged through the mixed oxidation fuel nozzle 205. The discharged mixed oxidation fuel is oxidized in the oxidizing portion 210 and generates heat, and the exhaust created after the oxidation converts the water supplied from a water supplier 402 into steam by transmitting the remaining heat to the evaporator, and then is discharged through an exhaust outlet 404 of the evaporator 400. The converted steam is mixed with main fuel supplied from main fuel inlet 401 through a connecting pipe 403 and then flows to a reformer 300.

The main fuel and the steam are converted into a hydrogen-rich reformate by the steam reforming method and then flows to a reactor (not shown) for reducing carbon monoxide or the fuel electrode of the fuel cell through a reformer inner pipe 301.

Although preferred embodiments of the present invention were described above, the scope of the present invention is not limited to the preferred embodiments and can be implemented by a variety of nozzle assemblies and reforming apparatuses having the nozzle assemblies without departing from the scope of the present invention as described in claims.

**Claims**

1.  A fuel cell system comprising:

> a fuel cell that generates anode off-gas; and
> a fuel reforming apparatus, comprising:
>
>> a reformer (300);
>> an oxidising unit (200, 200a) for providing heat to the reformer;
>> an oxidising unit fuel supply for providing oxidising unit fuel to the oxidising unit; and
>> a nozzle assembly for providing the anode off-gas and the oxidising unit fuel to the oxidising unit, **characterized in that** the nozzle assembly comprises:
>>
>>> a nozzle plate (110) comprising a first nozzle (111) for providing the anode off-gas to the oxidising unit, and a plurality of second nozzles (112) surrounding the first nozzle for providing the oxidising unit fuel to the oxidising unit; and
>>> a connecting unit (120) extending from the nozzle plate (110) for providing the anode off-gas from the fuel cell to the first nozzle (111) and the oxidising unit fuel from the oxidising unit fuel supply to the plurality of second nozzles (112).

2.  The fuel cell system of claim 1, wherein the oxidising unit comprises:

> a housing (201) that is closed by the nozzle plate (110) of the nozzle assembly; and
> an oxidising portion (210) within the housing (210).

3.  The fuel cell system of claim 2, wherein the oxidising portion (210) comprises an oxidation catalyst.

4.  The fuel cell system of claim 1, 2 or 3, wherein the reformer (300) comprises:

> a vessel (302) for receiving a fuel to be reformed, the vessel being closed at one end by a lower plate (303);
> a reforming portion (310) for converting the fuel to be reformed to a reformate; and
> means (301) within the vessel for receiving and discharging the reformate,

wherein the reformer is disposed within the housing (201) of the oxidising unit.

5. The fuel cell system of claim 4, wherein the lower plate (303) is arranged relative to the nozzle plate (110) such that the anode off-gas and the oxidising unit fuel mix in the region between the lower plate (303) and the nozzle plate (110) and flow around the reformer into the oxidising portion (210) of the oxidising unit (200).

6. The fuel cell system of claim 4, further comprising an oxidising unit plate (203) between the lower plate (303) and the nozzle plate (110), the oxidising unit plate including third nozzles (205) for providing a mixture of the anode off-gas and the oxidising unit fuel to the oxidising portion (210).

7. The fuel cell system of claim 6, wherein the total area of the third nozzles is between one to four times the sum of the total areas of the first nozzles and the second nozzles.

8. The fuel cell system of claim 6 or 7, wherein walls (201b, 301b) forming a space between the third nozzles and the oxidising portion (210) are arranged such that the space gradually widens from the third nozzles (210) towards the oxidising portion (210).

9. The fuel cell system of any one of the preceding claims, further comprising an evaporator (400) arranged to receive exhaust heat from the oxidising unit (200a) to convert water to steam and to provide the steam to the reformer (300) with the fuel to be reformed.

10. The fuel cell system of any one of the preceding claims, wherein the first nozzle (111) is centrally located in the nozzle plate (110).

11. The fuel cell system of any one of the preceding claims, wherein the second nozzles (112) are uniformly distributed around the first nozzle (111).

12. The fuel cell system of any one of the preceding claims, wherein the connecting unit (120) comprises:

a first channel (121) between the first nozzle (111) and an anode off-gas inlet (140); and
a second channel (122) surrounding the first channel and connecting the plurality of second nozzles (112) with the oxidising unit fuel inlet (130).

13. The fuel cell system of claim 12, wherein the second channel (122) comprises:

a first portion (122b) comprising a continuous channel for receiving the oxidising unit fuel; and
a second portion (122a) comprising a plurality of separate channels connected to the continuous channel for providing the oxidising unit fuel to the plurality of second nozzles.

14. The fuel cell system of any one of the preceding claims, wherein the relative areas of the first and second nozzles are arranged so that the oxidising unit fuel is supplied in a ratio of one to three and a half times the volume of the anode off-gas.

15. The fuel cell system of any one of the preceding claims, wherein the maximum diameter of the first nozzle is 2.5mm and the maximum diameter of each of the second nozzles is 1.5mm.

**Patentansprüche**

1. Brennstoffzellensystem, umfassend:

eine Brennstoffzelle, die Anodenabgas erzeugt; und
eine Brennstoffreformiervorrichtung, umfassend:

einen Reformer (300);
eine Oxidationseinheit (200, 200a) zum Abgeben von Wärme an den Reformer;
eine Oxidationseinheit-Brennstoffzufuhr zum Abgeben von Oxidationseinheit-Brennstoff an die Oxidationseinheit; und

eine Düsenanordnung zum Abgeben des Anodenabgases und des Oxidationseinheit-Brennstoffs an die Oxidationseinheit,

**dadurch gekennzeichnet, dass**
die Düsenanordnung umfasst:

eine Düsenplatte (110) umfassend eine erste Düse (111) zum Abgeben des Anodenabgases an die Oxidationseinheit und eine Vielzahl von die erste Düse umgebenden zweiten Düsen (112) zum Abgeben des Oxidationseinheit-Brennstoffs an die Oxidationseinheit; und
eine sich von der Düsenplatte (110) aus erstreckende Verbindungseinheit (120) zum Abgeben des Anodenabgases von der Brennstoffzelle an die erste Düse (111) und des Oxidationseinheit-Brennstoffs von der Oxidationseinheit-Brennstoffzufuhr an die Vielzahl der zweiten Düsen (112).

2. Brennstoffzellensystem nach Anspruch 1, wobei die Oxidationseinheit umfasst:

ein Gehäuse (201), das durch die Düsenplatte (110) der Düsenanordnung verschlossen ist; und
einen Oxidationsabschnitt (210) innerhalb des Gehäuses (210).

3. Brennstoffzellensystem nach Anspruch 2, wobei der Oxidationsabschnitt (210) einen Oxidationskatalysator umfasst.

4. Brennstoffzellensystem nach Anspruch 1, 2 oder 3, wobei der Reformer (300) umfasst:

einen Behälter (302) zum Aufnehmen eines zu reformierenden Brennstoffs, wobei der Behälter an einem Ende durch eine untere Platte (303) verschlossen ist;
einen Reformierabschnitt (310) zum Umwandeln des zu reformierenden Brennstoffs in ein Reformat; und
Mittel (301) innerhalb des Behälters zum Aufnehmen und Ablassen des Reformats, wobei der Reformer innerhalb des Gehäuses (201) der Oxidationseinheit angeordnet ist.

5. Brennstoffzellensystem nach Anspruch 4, wobei die untere Platte (303) relativ zur Düsenplatte (110) derart angeordnet ist, dass sich das Anodenabgas und der Oxidationseinheit-Brennstoff im Bereich zwischen der unteren Platte (303) und der Düsenplatte (110) vermischen und um den Reformer in den Oxidationsabschnitt (210) der Oxidationseinheit (200) strömen.

6. Brennstoffzellensystem nach Anspruch 4, ferner umfassend eine Oxidationseinheit-Platte (203) zwischen der unteren Platte (303) und der Düsenplatte (110), wobei die Oxidationseinheit-Platte dritte Düsen (205) zum Abgeben eines Gemisches aus dem Anodenabgas und dem Oxidationseinheit-Brennstoff an den Oxidationsabschnitt (210) umfasst.

7. Brennstoffzellensystem nach Anspruch 6, wobei die Gesamtfläche der dritten Düsen zwischen ein bis vier Mal die Summe der Gesamtflächen der ersten Düsen und der zweiten Düsen beträgt.

8. Brennstoffzellensystem nach Anspruch 6 oder 7, wobei einen Raum zwischen den dritten Düsen und dem Oxidationsabschnitt (210) bildende Wände (201 b, 301 b) derart angeordnet sind, dass sich der Raum sukzessiv von den dritten Düsen (210) zum Oxidationsabschnitt (210) hin verbreitert.

9. Brennstoffzellensystem nach einem der vorstehenden Ansprüche, ferner umfassend einen Verdampfer (400), der zum Aufnehmen von Abgaswärme aus der Oxidationseinheit (200a) angeordnet ist, um Wasser in Dampf umzuwandeln und den Dampf an den Reformer (300) mit dem zu reformierenden Brennstoff abzugeben.

10. Brennstoffzellensystem nach einem der vorstehenden Ansprüche, wobei sich die erste Düse (111) mittig in der Düsenplatte (110) befindet.

11. Brennstoffzellensystem nach einem der vorstehenden Ansprüche, wobei die zweiten Düsen (112) gleichmäßig um die erste Düse (111) herum verteilt sind.

12. Brennstoffzellensystem nach einem der vorstehenden Ansprüche, wobei die Verbindungseinheit (120) umfasst:

einen ersten Kanal (121) zwischen der ersten Düse (111) und einem Anodenabgaseinlass (140); und

einen den ersten Kanal umgebenden zweiten Kanal (122), der die Vielzahl von zweiten Düsen (112) mit dem Oxidationseinheit-Brennstoffeinlass (130) verbindet.

13. Brennstoffzellensystem nach Anspruch 12, wobei der zweite Kanal (122) umfasst:

einen ersten Abschnitt (122b) umfassend einen durchgehenden Kanal zum Aufnehmen des Oxidationseinheit-Brennstoffs; und
einen zweiten Abschnitt (122a) umfassend eine Vielzahl von mit dem durchgehenden Kanal verbundenen separaten Kanälen zum Abgeben des Oxidationseinheit-Brennstoffs an die Vielzahl von zweiten Düsen.

14. Brennstoffzellensystem nach einem der vorstehenden Ansprüche, wobei die relativen Flächen der ersten und zweiten Düsen so angeordnet sind, dass der Oxidationseinheit-Brennstoff in einem Verhältnis von eins zu drei und ein halbes Mal des Volumens des Anodenabgases zugeführt wird.

15. Brennstoffzellensystem nach einem der vorstehenden Ansprüche, wobei der maximale Durchmesser der ersten Düse 2,5 mm und der maximale Durchmesser jeder der zweiten Düsen 1,5 mm beträgt.

**Revendications**

1. Système de pile à combustible comprenant :

une pile à combustible qui engendre un effluent gazeux d'anode ; et
un appareil de reformage de combustible, comprenant :

un reformeur (300) ;
une unité oxydante (200, 200a) pour fournir de la chaleur au reformeur ;
une source de combustible d'unité oxydante pour fournir un combustible d'unité oxydante à l'unité oxydante ;
un assemblage de buses pour fournir l'effluent de gaz d'anode et le combustible d'unité oxydante à l'unité oxydante, **caractérisé en ce que** l'assemblage de buses comprend :

un plateau à buses (110) comprenant une première buse (111) pour fournir l'effluent gazeux d'anode à l'unité oxydante, et une pluralité de secondes buses (112) entourant la première buse pour fournir le combustible d'unité oxydante à l'unité oxydante ;
une unité de connexion (120) s'étendant à partir du plateau à buses (110) pour fournir l'effluent gazeux d'anode provenant de la pile à combustible à la première buse (111) et le combustible d'unité oxydante provenant de la source de combustible d'unité oxydante à la pluralité de secondes buses (112).

2. Système de pile à combustible suivant la revendication 1, dans lequel l'unité oxydante comprend :

un boîtier (201) qui est clos hermétiquement par le plateau à buses (110) de l'assemblage de buses ; et
une partie oxydante (210) à l'intérieur du boîtier (210).

3. Système de pile à combustible suivant la revendication 2, dans lequel la partie oxydante (210) comprend un catalyseur d'oxydation.

4. Système de pile à combustible suivant la revendication 1, 2 ou 3, dans lequel le reformeur (300) comprend :

un récipient (302) pour recevoir un combustible à reformer, le récipient étant clos hermétiquement à une extrémité par une plaque inférieure (303) ;
une portion de reformage (310) pour convertir le combustible à reformer en un reformat ; et
un moyen (301) à l'intérieur du récipient pour recevoir et décharger le reformat,
dans lequel le reformeur est placé à l'intérieur du boîtier (201) de l'unité oxydante.

5. Système de pile à combustible suivant la revendication 4, dans lequel la plaque inférieure (303) est placée par rapport au plateau à buses (110) de telle sorte que l'effluent gazeux d'anode et le combustible d'unité oxydante se mélangent à la région entre la plaque inférieure (303) et le plateau à buses (110) et s'écoulent autour du reformeur dans la partie oxydante (210) de l'unité oxydante (200).

6. Système de pile à combustible suivant la revendication 4, comprenant en outre une plaque d'unité oxydante (203) entre la plaque inférieure (303) et le plateau à buses (110), la plaque d'unité oxydante comprenant des troisièmes buses (205) pour fournir un mélange de l'effluent gazeux d'anode et du combustible d'unité oxydante à la partie oxydante (210).

7. Système de pile à combustible suivant la revendication 6, dans lequel la surface totale des troisièmes buses est comprise entre une et quatre fois la somme des surfaces totales des premières buses et des deuxièmes buses.

8. Système de pile à combustible suivant la revendication 6 ou 7, dans lequel les parois (201b, 301b) formant un espace entre les troisièmes buses et la partie oxydante (210) sont disposées de telle sorte que l'espace s'élargisse progressivement à partir des troisièmes buses (210) vers la partie oxydante (210).

9. Système de pile à combustible suivant l'une quelconque des revendications précédentes, comprenant en outre un évaporateur (400) disposé pour recevoir la chaleur évacuée de l'unité oxydante (200a) pour convertir de l'eau en vapeur d'eau et pour fournir la vapeur d'eau au reformeur (300) avec le combustible à reformer.

10. Système de pile à combustible suivant l'une quelconque des revendications précédentes, dans lequel la première buse (111) est située en position centrale dans le plateau à buses (110).

11. Système de pile à combustible suivant l'une quelconque des revendications précédentes, dans lequel les deuxièmes buses (112) sont distribuées uniformément autour de la première buse (111).

12. Système de pile à combustible suivant l'une quelconque des revendications précédentes, dans lequel l'unité de connexion (120) comprend :

un premier canal (121) entre la première buse (111) et un orifice d'admission d'effluent gazeux d'azote (140) ; et un second canal (122) entourant le premier canal et connectant la pluralité de secondes buses (112) avec l'orifice d'admission de combustible d'unité oxydante (130).

13. Système de pile à combustible suivant la revendication 12, dans lequel le second canal (122) comprend :

une première partie (122b) comprenant un canal continu pour recevoir le combustible d'unité oxydante ; et une seconde partie (122a) comprenant une pluralité de canaux séparés connectés au canal continu pour fournir le combustible d'unité oxydante à la pluralité de deuxièmes buses.

14. Système de pile à combustible suivant l'une quelconque des revendications précédentes, dans lequel les surfaces relatives des première et deuxième buses sont disposées de telle sorte que le combustible d'unité oxydante soit fourni en un rapport de un à trois, et une demi-fois le volume de l'effluent gazeux d'anode.

15. Système de pile à combustible suivant l'une quelconque des revendications précédentes, dans lequel le diamètre maximal de la première buse est égal à 2,5 mm et le diamètre maximal de chacune des deuxièmes buses est égal à 1,5 mm.

FIG. 1

FIG. 2A

## FIG. 2B

121   122a

## FIG. 2C

121   122b

# FIG. 3

# FIG. 4

# FIG. 5

# FIG. 6

# FIG. 7

## FIG. 8

**EP 2 375 482 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5833447 A
- WO 2007008973 A
- EP 1205710 A
- US 20080081233 A
- US 7828864 B